# EUROPÄISCHE PATENTSCHRIFT

(11) **EP 1 307 664 B1**
(45) Veröffentlichungstag und Bekanntmachung des Hinweises auf die Patenterteilung: **27.06.2007**
(21) Anmeldenummer: 01957726.1
(22) Anmeldetag: 20.07.2001
(51) Int. Cl.: F16D 63/00, F16D 49/08, F16D 65/18

(54) **MITTELS BANDBREMSEINRICHTUNG BETÄTIGTE SCHEIBENBREMSE**
DISC BRAKE THAT IS ACTUATED BY MEANS OF A BAND BRAKE DEVICE
FREIN A DISQUE ACTIONNE PAR UN DISPOSITIF DE FREINAGE A RUBAN

(30) Priorität: 02.08.2000 DE 10037598
(43) Veröffentlichungstag der Anmeldung: 07.05.2003
(73) Patentinhaber: ROBERT BOSCH GMBH, 70442 Stuttgart (DE)
(72) Erfinder: BAUMANN, Dietmar, 71282 Hemmingen (DE); SCHMIDT, Hanniel, 76307 Karlsbad (DE); VOLLERT, Herbert, 71665 Vaihingen/Enz (DE); KELLER, Frieder, 76698 Ubstadt-Weiher (DE)
(86) Internationale Anmeldenummer: PCT/DE2001/002746
(87) Internationale Veröffentlichungsnummer: WO 2002/010607

(56) Entgegenhaltungen:
- AT-B- 330 653
- DE-A- 2 829 201
- DE-A- 4 207 640
- GB-A- 706 640
- GB-A- 1 211 477
- US-A- 4 721 190
- US-A- 5 125 160

## Beschreibung

### Stand der Technik

Die Erfindung betrifft eine Reibungsbremse für ein Kraftfahrzeug mit den Merkmalen des Oberbegriffs des Anspruchs 1.

Aus der DE 42 07 640 A1 ist eine als Scheibenbremse ausgebildete Reibungsbremse bekannt. Die bekannte Reibungsbremse weist eine Bremsscheibe als Bremskörper auf, gegen den zur Erzeugung eines Bremsmoments bzw. einer Bremskraft ein Reibbremsbelag drückbar ist. Zum Drücken des Reibbremsbelags gegen den Bremskörper weist die bekannte Reibungsbremse einen Kolben auf, der mittels eines Keiltriebs durch Drehung um eine Kolbenachse senkrecht zur Bremsscheibe verschiebbar ist und der den Reibbremsbelag gegen die Bremsscheibe drückt.

Eine Antriebsenergie zum Drehen und Verschieben des Bremskolbens wird dem drehbaren Bremskörper mit einer steuerbaren, elektromagnetischen Reibungskupplung entnommen. Die Reibungskupplung ist ringförmig ausgebildet und koaxial zu einer Drehachse des Bremskörpers angeordnet. Ein kreisscheibenförmiger Kupplungsbelag ist fest und koaxial am Bremskörper angebracht, er dreht mit dem Bremskörper mit. Ein eine Wicklung aufweisender, elektromagnetischer Teil der Reibungskupplung ist ringförmig ausgebildet und drehbar koaxial zum Bremskörper angeordnet. Durch Bestromen der Wicklung gelangt der elektromagnetische Teil der Reibungskupplung in Reibschluss mit dem Bremskörper festen und mit dem Bremskörper mitdrehenden Kupplungsbelag, so dass der elektromagnetische Teil der Reibungskupplung vom Bremskörper zu einer Drehbewegung angetrieben wird. Ein auf den elektromagnetischen Teil der Reibungskupplung vom Bremskörper ausgeübtes Antriebsmoment ist abhängig von einer Stromstärke, mit der die Wicklung der elektromagnetischen Reibungskupplung bestromt wird. Der elektromagnetische Teil der Reibungskupplung weist eine Verzahnung auf, die mit einer Verzahnung des Kolbens der Betätigungseinrichtung kämmt, so dass durch Bestromen der Wicklung der Reibungskupplung der Kolben drehend antreibbar ist und dadurch den Reibbremsbelag gegen den Bremskörper drückt.

Die US-A-5 125 160 offenbart eine Bandbremse mit einem um einen Bremskörper geschlungenen Bremsband. Betätigt wird die Bandbremse über einen Handhebel, der ein Ende des Bremsbandes spannt. Das andere Ende des Bremsbandes ist ortsfest. Die bekannte Bandbremse ist nur für eine Drehrichtung geeignet.

### Vorteile der Erfindung

Die erfindungsgemäße Reibungsbremse mit den Merkmalen des Anspruchs 1 weist eine Reibungsbremse beispielsweise in Bauform einer Scheiben bremse auf. Zusätzlich weist die Reibungsbremse eine Bandbremse mit einem Bremsband auf, welches einen drehbaren Bremskörper umschlingt. Die Bandbremse ist ebenfalls eine Reibungsbremse. Man kann deswegen von einer ersten und einer zweiten Reibungsbremse sprechen, wobei die zweite Reibungsbremse die Bandbremse ist. Zur Unterscheidung wird nachfolgend die Bandbremse nicht als Reibungsbremse bezeichnet. Bei nichtbetätigter Reibungsbremse umschlingt das Bremsband der Bandbremse den Bremskörper lose. Zum Erzeugen eines Bremsmoments bzw. einer Bremskraft wird das Bremsband gespannt und bremst dadurch den Bremskörper. Zugleich wirkt eine Zugspannung auf das Bremsband, die bei der erfindungsgemäßen Reibungsbremse zum Andrücken eines Reibbremsbelags der Reibungsbremse an einen drehbaren Bremskörper genutzt wird. Der Bremskörper kann derselbe oder auch ein anderer als der vom Bremsband der Bandbremse umschlungene Bremskörper sein. Das Bremsband der Bandbremse steht in Wirkverbindung mit der Betätigungseinrichtung der Reibungsbremse, mit der der Reibbremsbelag der Reibungsbremse gegen den Bremskörper drückbar ist. Eine Zugspannung des Bremsbandes treibt die Betätigungseinrichtung der Reibungsbremse so an, dass letztere den Reibbremsbelag gegen den Bremskörper drückt und dadurch ein Bremsmoment bzw. eine Bremskraft erzeugt. Die Betätigungseinrichtung der Reibungsbremse kann ausschließlich mit dem Bremsband der Bandbremse angetrieben werden oder die Zugspannung des Bremsbandes wirkt zusätzlich zu einer durch Fremdkraft und/oder durch Muskelkraft auf die Betätigungseinrichtung der Reibungsbremse ausgeübte Antriebskraft. Die Fremdkraft kann beispielsweise elektromotorisch aufgebracht, die Muskelkraft in an sich bekannter Weise beispielsweise hydraulisch auf die Betätigungseinrichtung der Reibungsbremse übertragen werden.

Die erfindungsgemäße Reibungsbremse hat den Vorteil, dass ein Teil der zum Erzeugen eines Bremsmoments bzw. einer Bremskraft notwendigen Energie dem drehenden und zu bremsenden Bremskörper entnommen wird. Die erfindungsgemäße Reibungsbremse weist eine Bremsunterstützung in dem Sinne auf, dass mit einer vergleichsweisen geringen, auf das Bremsband ausgeübten Kraft ein hohes Bremsmoment bzw. eine große Bremskraft erzeugbar ist. Dabei wirkt die Bandbremse doppelt: Zum einen bremst die Bandbremse unmittelbar den von ihr umschlungenen Bremskörper. Zum anderen wird die auf das Bremsband ausgeübte Zugspannung zum Antreiben der Betätigungseinrichtung der Reibungsbremse und damit zum Andrücken des Reibbremsbelag der Reibungsbremse an den Bremskörper genutzt. Aufgrund einer hohen, erreichbaren Bremsunterstützung lässt sich die erfindungsgemäße Reibungsbremse mit geringer Energie betätigen. Sie lässt sich mit geringem Gewicht und klein ausbilden und weist eine hohe Dynamik bei ihrer Betätigung auf. Weiterer Vorteil der erfindungsgemäßen Reibungsbremse ist ihre gute Dosierbarkeit.

Die Unteransprüche haben vorteilhafte Ausgestaltungen und Weiterbildungen der im Anspruch 1 angegebenen Erfindung zum Gegenstand.

Aufgrund der möglichen, geringen Betätigungsenergie und der hohen Dynamik eignet sich die erfindungsgemäße Reibungsbremse insbesondere zur Ausbildung als elektromechanische Reibungsbremse. Anspruch 8 sieht deswegen einen Elektromotor zum Betätigen der Reibungsbremse vor. Der Elektromotor übt vorzugsweise über ein Getriebe die zum Betätigen der Reibungsbremse erforderliche Zugkraft auf das Bremsband der Bandbremse der erfindungsgemäßen Reibungsbremse aus. Wegen der geringen, erforderlichen Energie zum Betätigen der Reibungsbremse reicht ein kleinbauender, leichter Elektromotor mit geringer Stromaufnahme aus, der ein elektrisches Bordnetz eines mit der erfindungsgemäßen Reibungsbremse ausgerüsteten Kraftfahrzeugs nur gering belastet. Trotzdem lässt sich aufgrund der hohen Dynamik und aufgrund der Bremsunterstützung in kurzer Zeit ein hohes Bremsmoment bzw. eine große Bremskraft aufbringen.

### Zeichnung

Die Erfindung wird nachfolgend anhand eines in der Zeichnung dargestellten Ausführungsbeispiel näher erläutert. Es zeigen:
- Figur 1: eine Ansicht einer erfindungsgemäßen Reibungsbremse;
- Figur 2: einen Achsschnitt der Reibungsbremse entlang Linie II - II in Figur 1.

### Beschreibung des Ausführungsbeispiels

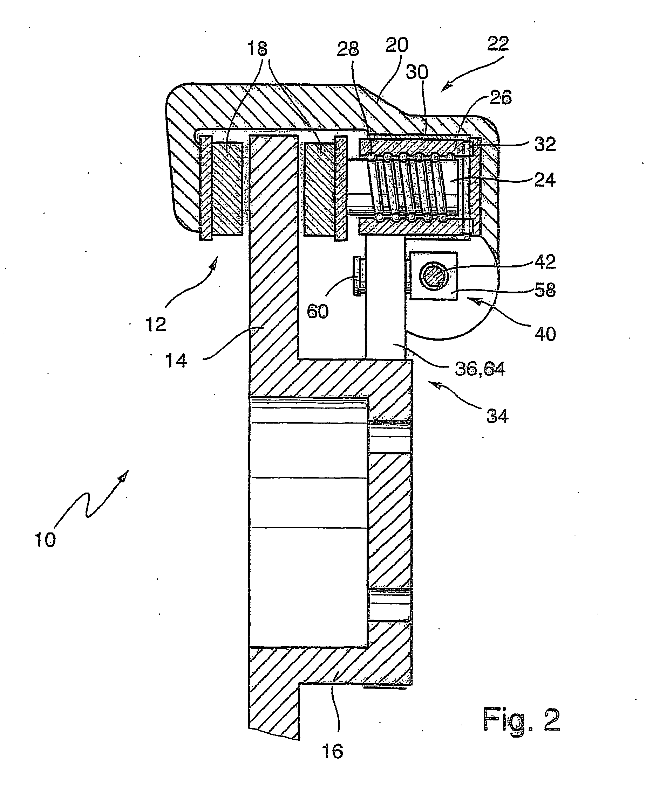

Die in der Zeichnung dargestellte, insgesamt mit 10 bezeichnete, erfindungsgemäße Reibungsbremse weist eine Scheibenbremse 12 mit einer Bremsscheibe 14 auf. Die Bremsscheibe 14 ist einstückig mit einer Trommel 16, die eine Nabe der Bremsscheibe 14 zum drehfesten Verbinden der Bremsscheibe 14 mit einem nicht dargestellten Fahrzeugrad bildet. Die Bremsscheibe 14 bildet einen Bremskörper der Scheibenbremse 12. Zum Bremsen der Bremsscheibe 14 weist die Scheibenbremse 12 zwei Reibbremsbeläge 18 auf, die in einem Bremssattel 20 aufgenommen sind. Der Bremssattel 20 ist als Schwimmsattel ausgebildet, so dass durch Andrücken des in Figur 2 rechts dargestellten Reibbremsbelags 18 gegen eine Seite der Bremsscheibe 14 der andere, in Figur 2 links dargestellte Reibbremsbelag 18 gegen die andere Seite der Bremsscheibe 14 gedrückt wird.

Zum Drücken der Reibbremsbeläge 18 gegen die Bremsscheibe 14 weist die Reibungsbremse 10 eine Betätigungseinrichtung in Form eines Kugelgewindetriebs 22 auf. Der Kugelgewindetrieb 22 weist eine Spindel 24, eine Mutter 26 und Kugeln 28 auf, die die Mutter 26 in an sich bekannter Weise nach Art eines Schraubgewindes mit der Spindel 24. verbinden. An einem Ende der Spindel 24 ist der eine Reibbremsbelag 18 angebracht. Die Mutter 26 ist mit einer Lagerbuchse 30 drehbar im Bremssattel 20 gelagert und stützt sich über ein Axial-Rollenlager 32 drehbar und axial am Bremssattel 20 ab. Durch rotierenden Antrieb der Mutter 26 in einer Zuspannrichtung wird die Spindel 24 axial in Richtung der Bremsscheibe 14 verschoben und drückt den einen Reibbremsbelag 18 gegen die Bremsscheibe 14. Eine Reaktionskraft verschiebt den als Schwimmsattel ausgebildeten Bremssattel 20, so dass der Bremssattel 20 den anderen Reibbremsbelag 18 gegen die andere Seite der Bremsscheibe 14 drückt. Auf diese Weise wird ein Bremsmoment auf die Bremsscheibe 14 ausgeübt, die Bremsscheibe 14 wird gebremst. Zum Lösen wird die Mutter 26 des Kugelgewindetriebs 22 in entgegengesetzter Richtung (Rückstellrichtung) rotierend angetrieben, wodurch die Spindel 24 von der Bremsscheibe 14 wegverschoben, die Bremsbeläge 18 von der Bremsscheibe 14 abgehoben und die Scheibenbremse 12 gelöst wird.

Außer der Scheibenbremse 12 weist die in der Zeichnung dargestellte, erfindungsgemäße Reibungsbremse 10 eine Bandbremse 34 auf. Einen Bremskörper der Bandbremse 34 bildet die mit der Bremsscheibe 14 einstückige Trommel 16, die auch die Nabe der Bremsscheibe 14 bildet. Die Bandbremse 34 weist ein Bremsband 36 auf, welches um die Trommel 16 geschlungen ist. Zwei Enden 38 des Bremsbandes 36 sind gemeinsam an einer Stelle eines Umfangs der Mutter 26 des Kugelgewindetriebs 22 befestigt, der die Betätigungseinrichtung der Scheibenbremse 12 bildet. Die beiden Enden 38 des Bremsbandes 36 sind von der Trommel 16 der Bremsscheibe 14 kommend in derselben Umfangsrichtung um einen Teil eines Umfangs der Mutter 26 geschlungen. Wird das Bremsband 36 zum Bremsen unter eine Zugspannung gesetzt, üben die beiden Enden 38 des Bremsbandes 36 ein Drehmoment in der Zuspannrichtung auf die Mutter 26 des Kugelgewindetriebs 22 aus.

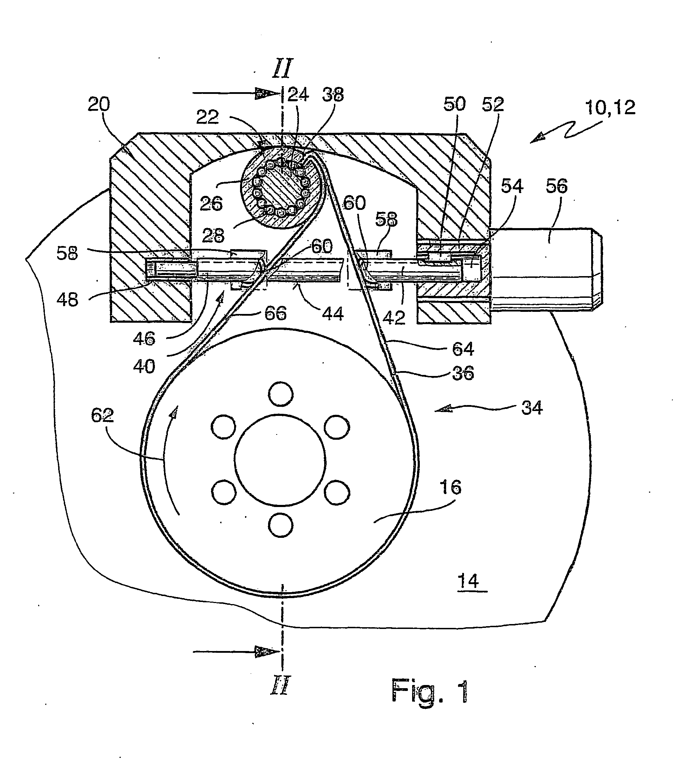

Um eine Zugspannung auf das Bremsband 36 auszuüben, weist die Bandbremse 34 eine Spanneinrichtung 40 auf. Die Spanneinrichtung 40 weist eine Spindel 42 mit einem Rechtsgewinde 44 und einem Linksgewinde 46 auf. Die Spindel 42 ist, wie in Figur 1 sichtbar, zwischen der Trommel 16 der Bremsscheibe 14 und dem Kugelgewindetrieb 22 angeordnet. Wie in Figur 2 sichtbar, ist die Spindel 42 seitlich neben dem Bremsband 36 angeordnet. Ein Ende der Spindel 42 ist drehbar und axial verschieblich in einer Lagerbuchse 48 gelagert, die in eine Bohrung im Bremssattel 20 eingesetzt ist. Ein anderes Ende der Gewindespindel 42 ist axial verschieblich und drehfest mittels einer Gleitfeder 50 mit einer (nicht schaltbaren) Wellenkupplung 52 verbunden. Die Gleitfeder 50 liegt verschieblich in einer Nut der Spindel 42 und einer Nut in einer Bohrung 54 der Wellenkupplung 52 ein. Die Wellenkupplung 52 ist drehfest mit einer Motorwelle eines Elektromotors 56. Mit dem Elektromotor 56 lässt sich die Spindel 42 der Spanneinrichtung 40 der Bandbremse 34 rotierend antreiben.

Auf das Rechtsgewinde 44 und das Linksgewinde 46 der Spindel 42 ist je eine Mutter 58 aufgesetzt. Die Muttern 58 sind in Figur 1 teilweise weggebrochen dargestellt, um den Verlauf des Bremsbandes 36 sichtbar zu machen. Durch drehenden Antrieb der Spindel 42 mittels des Elektromotors 56 lassen sich aufgrund des Rechts- und des Linksgewindes 44, 46 der Spindel 42 die beiden Muttern 58 aufeinander zu oder voneinander wegbewegen. Von den beiden Muttern 58 stehen zwei Zapfen 60 zur Seite ab, die aufeinander abgewandten Außenseiten des Bremsbandes 36 anliegen. Die beiden Zapfen 60 liegen an zwei Abschnitten 64, 66 des Bremsbandes 36 an, die von einem Umfang der Trommel 16 der Bremsscheibe 14 weg zum Umfang der Mutter 26 des Kugelgewindetriebs 22 führen. Werden die Muttern 58 der Spanneinrichtung 40 durch drehenden Antrieb der Spindel 42 in einer Spannrichtung aufeinander zubewegt, drücken die Zapfen 60 die von der Trommel 16 der Bremsscheibe 14 zur Mutter 26 des Kugelgewindetriebs 22 führenden Abschnitte 64, 66 des Bremsbandes 36 zusammen und setzten dadurch das Bremsband 36 unter eine Zugspannung. Die Zugspannung bewirkt eine Reibung zwischen dem Bremsband 36 und der Trommel 16 der Bremsscheibe 14, das Bremsband 36 übt ein Bremsmoment auf die Trommel 16 aus. Bei einer angenommenen Drehrichtung der Bremsscheibe 14 mit der Trommel 16 in Richtung des Pfeils 62 in Figur 1 übt die Trommel 16 durch Reibung einen Zug auf den in Figur 1 rechten, von der Trommel 16 zur Mutter 26 des Kugelgewindetriebs 22 führenden Abschnitt 64 des Bremsbandes 36 aus. Dieser Abschnitt 64 des Bremsbandes 36 stützt über den Zapfen 60 die in Figur 1 rechte Mutter 58 der Spanneinrichtung 40 gegen eine Weiterverschiebung ab. Durch weitere Drehung der Spindel 42 der Spanneinrichtung 40 verschiebt sich die Spindel 42 infolgedessen axial. Mit der Spindel 42 verschiebt sich die in Figur 1 links dargestellte Mutter 58 und drückt mit ihrem Zapfen 60 den in Figur 1 linken, von der Trommel 16 der Bremsscheibe 14 zur Mutter 26 des Kugelgewindetriebs 22 führenden Abschnitt 66 des Bremsbandes 36 in Richtung des in Figur 1 rechts dargestellten Abschnitts 64 des Bremsbandes 36. Auf diese Weise lässt sich die Zugspannung des Bremsbandes 36 und damit das vom Bremsband 36 auf die Trommel 16 der Bremsscheibe 14 ausgeübte Bremsmoment dosiert erhöhen.

Da die beiden Enden 38 des Bremsbandes 36 in derselben Umfangsrichtung an der Mutter 26 des Kugelgewindetriebs 22 angreifen, üben die beiden Enden 38 des mit der Spanneinrichtung 40 unter Zugspannung gesetzten Bremsbandes 36 ein Drehmoment in Zuspannrichtung auf die Mutter 26 des Kugelgewindetriebs 22 aus. Das zum Bremsen mit der Spanneinrichtung 40 unter Zugspannung gesetzte Bremsband 36 der Bandbremse 34 übt also nicht nur ein Bremsmoment auf die Trommel 16 der Bremsscheibe 14 aus, sondern das unter Zugspannung gesetzte Bremsband 36 treibt auch die Mutter 26 des Kugelgewindetriebs 22 zu einer Drehbewegung in einer Zuspannrichtung der Scheibenbremse 12 an. Das Bremsband 36 drückt, wenn es unter Zugspannung gesetzt wird, über den Kugelgewindetrieb 22 die beiden Reibbremsbeläge 18 gegen die Bremsscheibe 14 und übt dadurch auch auf die Bremsscheibe 14 ein Bremsmoment aus. Die Bandbremse 34 der erfindungsgemäßen Reibungsbremse 10 bremst mit ihrem Bremsband 36 unmittelbar die Trommel 16 der Bremsscheibe 14 und mittelbar über die Scheibenbremse 12 die Bremsscheibe 14. Es ergibt sich eine hohe Bremsunterstützung, so dass mit einem niedrigen, auf die Spindel 42 der Spanneinrichtung 40 der Bandbremse 34 ausgeübten Drehmoment ein hohes Bremsmoment auf die Bremsscheibe 14 ausübbar ist. Dadurch ist ein kleinbauender Elektromotor 56 mit geringer elektrischer Leistungsaufnahme ausreichend zur Betätigung der erfindungsgemäßen Reibungsbremse 10.

Zum Lösen der Reibungsbremse 10 wird der Elektromotor 56 in einer Rückstellrichtung angetrieben, so dass sich die beiden Muttern 58 der Spanneinrichtung 40 voneinander entfernen und die Zugspannung des Bremsbandes 36 lösen. Das Bremsband 36 umschlingt die Trommel 16 der Bremsscheibe 14 lose. Durch die weggefallene Zugspannung des Bremsbandes 36 löst sich die Scheibenbremse 12, so dass die Bremsscheibe 14 wieder frei drehbar ist.

Es ist möglich, den Kugelgewindetrieb 22 und die Spindel 42 mit den Muttern 58 der Spanneinrichtung 40 der Bandbremse 34 selbsthemmungsfrei auszubilden, so dass sich bei stromlosem Elektromotor 56 die erfindungsgemäße Reibungsbremse 10 selbsttätig löst. Beim dargestellten und beschriebenen Ausführungsbeispiel der Erfindung ist die Spindel 42 mit den Muttern 58 der Spanneinrichtung 40 der Bandbremse 34 selbsthemmend ausgebildet; so dass ein durch Bestromen des Elektromotors 56 in Zuspannrichtung aufgebrachtes Bremsmoment der Reibungsbremse 10 bei unbestromtem Elektromotor 56 aufrecht erhalten bleibt. Dies hat den Vorteil, dass der Elektromotor 56 zum Konstanthalten des Bremsmoments während einer Bremsung nicht bestromt werden muss, der Elektromotor 56 wird nur zum Ändern des Bremsmoments bestromt. Dies verringert eine Stromaufnahme des Elektromotors 56 und eine Belastung eines elektrischen Bordnetzes eines mit der Reibungsbremse 10 ausgerüsteten Kraftfahrzeugs. Auch verringert sich eine Erwärmung des Elektromotors 56 und ermöglicht dadurch einen kleinbauenden Elektromotor 56. Weiterer Vorteil einer selbsthemmenden Ausbildung der Spindel 42 mit den Muttern 58 ist die Verwendbarkeit der Reibungsbremse 10 als Feststellbremse, die ein durch Bestromung des Elektromotors 56 aufgebrachtes Bremsmoment ohne Weiterbestromung des Elektromotors 56 aufrecht erhält.

## Patentansprüche

1. Reibungsbremse, mit einem drehbaren Bremskörper (14), mit einem Reibbremsbelag (18), und mit einer Betätigungseinrichtung (22), mit der der Reibbremsbelag (18) gegen den Bremskörper (14) drückbar ist, **dadurch gekennzeichnet, dass** die Reibungsbremse (10) zusätzlich eine Bandbremse (34) aufweist, deren Bremsband (36) in Wirkverbindung mit der Betätigungseinrichtung (22) der Reibungsbremse (12) steht, so dass eine Zugspannung des Bremsbandes (36) der Bandbremse (34) die Betätigungseinrichtung (22) der Reibungsbremse (12) im Sinne eines Andrückens des Reibbremsbelags (18) gegen den Bremskörper (14) antreibt.

2. Reibungsbremse nach Anspruch 1, **dadurch gekennzeichnet, dass** die Bandbremse (34) eine Spanneinrichtung (40) mit einem Spannelement (58, 60) zum Spannen des Bremsbandes (36) aufweist, wobei das Spannelement (58, 60) zum Spannen des Bremsbandes (36) gegen einen tangential von einer Trommel (16) der Bandbremse (34) wegführenden Abschnitt (64, 66) des Bremsbandes (36) drückbar ist.

3. Reibungsbremse nach Anspruch 2, **dadurch gekennzeichnet, dass** die Spanneinrichtung (40) der Bandbremse (34) zwei Spannelemente (58, 60) aufweist, die zum Spannen des Bremsbandes (36) gegen zwei von der Trommel (16) der Bandbremse (34) wegführende Abschnitte (64, 66) des Bremsbandes (36) drückbar sind.

4. Reibungsbremse nach Anspruch 3, **dadurch gekennzeichnet, dass** die beiden Spannelemente (58, 60) aufeinander zu bewegbar und gegen einander abgewandte Außenseiten der von der Trommel (16) der Bandbremse (34) wegführenden Abschnitte (64, 66) des Bremsbandes (36) drückbar sind.

5. Reibungsbremse nach Anspruch 2, **dadurch gekennzeichnet, dass** das Spannelement (58, 60) eine Mutter (58) aufweist, die durch drehenden Antrieb einer Spindel (42) verschiebbar ist.

6. Reibungsbremse nach Anspruch 3, **dadurch gekennzeichnet, dass** die beiden Spannelemente (58, 60) jeweils eine Mutter (58) aufweisen, wobei die beiden Muttern (58) auf einer gemeinsamen Spindel (42) mit zwei gegenläufigen Gewinden (44, 46) für die beiden Muttern (58) angeordnet und durch Drehung der Spindel (42) in entgegengesetzten Richtungen verschiebbar sind.

7. Reibungsbremse nach Anspruch 5 oder 6, **dadurch gekennzeichnet, dass** die Spindel (42) axial verschieblich ist.

8. Reibungsbremse nach Anspruch 5 oder 6, **dadurch gekennzeichnet, dass** die Spanneinrichtung (40) einen Elektromotor (56) zum drehenden Antrieb der Spindel (42) aufweist.

9. Reibungsbremse nach Anspruch 1, **dadurch gekennzeichnet, dass** die Betätigungseinrichtung ein Schraubgetriebe (22) mit einem drehbaren Antriebselement (26) und einem durch Drehung des Antriebselements (26) verschiebbaren Abtriebselement (24) zum Drücken des Reibbremsbelags (18) gegen den Bremskörper (14) aufweist, und dass ein Ende (38) des Bremsbandes (36) exzentrisch an dem Antriebselement (26) des Schraubgetriebes (22) angreift.

10. Reibungsbremse nach Anspruch 9, **dadurch gekennzeichnet, dass** die beiden Enden (38) des Bremsbandes (36) exzentrisch an dem Antriebselement (26) des Schraubgetriebes (22) angreifen, so dass eine Zugspannung des Bremsbandes (36) über beide Enden (38) des Bremsbandes (36) ein Drehmoment in derselben Richtung auf das Antriebselement (26) ausübt.

## Claims

1. Friction brake, with a rotatable brake body (14), with a friction brake lining (18), and with an actuating device (22) with which the friction brake lining (18) can be pressed against the brake body (14), **characterized in that** the friction brake (10) additionally has a band brake (34), the brake band (36) of which is operatively connected to the actuating device (22) of the friction brake (12), with the result that a tensile stress of the brake band (36) of the band brake (34) drives the actuating device (22) of the friction brake (12) with the effect of pressing the friction brake lining (18) against the brake body (14).

2. Friction brake according to Claim 1, **characterized in that** the band brake (34) has a tensioning device (40) with a tensioning element (58, 60) for tensioning the brake band (36), with it being possible for the tensioning element (58, 60) to be pressed against a section (64, 66) of the brake band, which section leads away tangentially from a drum (16) of the band brake (34), in order to tension the brake band (36).

3. Friction brake according to Claim 2, **characterized in that** the tensioning device (40) of the band brake (34) has two tensioning elements (58, 60) which, in order to tension the brake band (36), can be pressed against two sections (64, 66) of the brake band (36), which sections lead away from the drum (16) of the band brake (34).

4. Friction brake according to Claim 3, **characterized in that** the two tensioning elements (58, 60) can be moved towards each other and can be pressed against mutually remote outer sides of those sections (64, 66) of the brake band (36) which lead away from the drum (16) of the band brake (34).

5. Friction brake according to Claim 2, **characterized in that** the tensioning element (58, 60) has a nut (58) which can be displaced by rotating drive of a spindle (42).

6. Friction brake according to Claim 3, **characterized in that** the two tensioning elements (58, 60) each have a nut (58), wherein the two nuts (58) are arranged on a common spindle (42) with two opposed threads (44, 46) for the two nuts (58) and can be displaced in opposite directions by rotation of the spindle (42).

7. Friction brake according to Claim 5 or 6, **characterized in that** the spindle (42) is displaceable axially.

8. Friction brake according to Claim 5 or 6, **characterized in that** the tensioning device (40) has an electric motor (56) for the rotating drive of the spindle (42).

9. Friction brake according to Claim 1, **characterized in that** the actuating device has a helical gearing (22) with a rotatable drive element (26) and an output element (24), which can be displaced by rotation of the drive element (26), for pressing the friction brake lining (18) against the brake body (14), and **in that** one end (38) of the brake band (36) acts eccentrically on the drive element (26) of the helical gearing (22).

10. Friction brake according to Claim 9, **characterized in that** the two ends (38) of the brake band (36) act eccentrically on the drive element (26) of the helical gearing (22), with the result that a tensile stress of the brake band (36) exerts, via both ends (38) of the brake band (36), a torque on the drive element (26) in the same direction.

## Revendications

1. Frein à disque comprenant un disque de frein (14) avec une garniture de friction (18), ainsi qu'un dispositif d'actionnement (22) pouvant mettre en pression la garniture (18) sur le disque de frein (14),
**caractérisé en ce que**
le frein à disque (10) comprend de plus un frein à bande (34) dont la bande de freinage (36) coopère avec le dispositif d'actionnement (22) du frein à disque (10), de sorte qu'une mise sous tension de traction de la bande de frein (36) du frein à bande (34) entraîne le dispositif d'actionnement (22) du frein à disque (10) dans le sens d'application de la garniture de friction (18) sur le disque de frein (14).

2. Frein à disque selon la revendication 1,
**caractérisé en ce que**
le frein à bande (34) comprend un dispositif de tension (40) avec un élément de tension (58, 60) pour tendre la bande de frein (36), cet élément de tension (58, 60) pouvant être mis en pression sur une partie (64, 66) de cette bande (36) quittant tangentiellement un tambour (16) du frein à bande (34).

3. Frein à disque selon la revendication 2,
**caractérisé en ce que**
le dispositif de tension (40) du frein à bande (34) comprend deux éléments de tension (58, 60) qui, pour tendre la bande de frein (36), peuvent être mis en pression sur des sections (64, 66) de cette bande de frein (36) quittant le tambour (16) du frein à bande (34).

4. Frein à disque selon la revendication 3,
**caractérisé en ce que**
les deux éléments de tension (58, 60) sont mobiles l'un par rapport à l'autre et peuvent être mis en pression sur des faces externes éloignées l'une de l'autre des parties (64, 66) de la bande de frein (36) quittant le tambour (16) du frein à bande (34).

5. Frein à disque selon la revendication 2,
**caractérisé en ce que**
l'élément de tension (58, 60) comprend un écrou (58) qui est déplacé en étant entraîné par une broche rotative (42).

6. Frein à disque selon la revendication 3,
**caractérisé en ce que**
les deux éléments de tension (58, 60) présentent chacun un écrou (58), les deux écrous (58) étant montés sur une broche commune (42) présentant deux filetages opposés (44, 46) pour les deux écrous (58) de sorte que la rotation de la broche (42) permet de les déplacer dans des sens opposés.

7. Frein à disque selon la revendication 5 ou 6,
**caractérisé en ce que**
la broche (42) coulisse axialement.

8. Frein à disque selon la revendication 5 ou 6,
**caractérisé en ce que**
le dispositif de tension (40) présente un moteur électrique (16) pour entraîner la broche (42) en rotation.

9. Frein à disque selon la revendication 1,
**caractérisé en ce que**
le dispositif d'actionnement comprend une transmission à vis (22) avec un élément d'entraînement (26) qui tourne et un élément de sortie (24) qui se déplace par rotation de l'élément d'entraînement (26), pour mettre en pression la garniture de frein (18) sur le disque de frein (14), une extrémité (38) de la bande de frein (36) étant en prise de manière excentrée sur l'élément d'entraînement (26) de la transmission à vis (22).

10. Frein à disque selon la revendication 9,
**caractérisé en ce que**
les deux extrémités (38) de la bande de frein (36) sont en prise de manière excentrée avec l'élément d'entraînement (26) de la transmission à vis (22), de sorte qu'une tension de traction de la bande de frein (36) exerce, par les deux extrémités (38) de celle-ci, un couple de rotation dans le même sens sur l'élément d'entraînement (26).
